# EUROPÄISCHE PATENTSCHRIFT

(11) **EP 0 534 202 B1**
(45) Veröffentlichungstag und Bekanntmachung des Hinweises auf die Patenterteilung: **30.11.1994**
(21) Anmeldenummer: 92115160.1
(22) Anmeldetag: 04.09.1992
(51) Int. Cl.: A47J 36/02

(54) **Koch- oder Bratgeschirr aus Metall**
Cooking or baking dish made out of metal
Récipient à cuire ou à frire en métal

(30) Priorität: 24.09.1991 DE 4131703
(43) Veröffentlichungstag der Anmeldung: 31.03.1993
(73) Patentinhaber: Thekla GmbH & Co., D-58706 Menden (DE)
(72) Erfinder: Gloerfeld, Joachim, Dipl.-Ing., W-5860 Iserlohn 1 (DE)
(74) Vertreter: Köchling, Conrad-Joachim

(56) Entgegenhaltungen:
- EP-A- 0 451 033
- WO-A-89/01752
- DE-A- 3 713 660
- GB-A- 2 166 340
- US-A- 3 143 241

## Beschreibung

Die Erfindung betrifft ein Koch- oder Bratgeschirr (1,3) aus Metall, wobei mindestens dessen Boden (2,4) aus Aluminium, Aluminium-Legierungen, Kupfer, Kupferlegierungen oder dergleichen relativ weichem metallischem Werkstoff besteht, der nicht induktiv erwärmbar ist, und der Boden (2,4) mit einem induktiv erwärmbaren Bodenteil verbunden ist, das aus Drähten oder dergleichen dünnen Formteilen (z.B. 5) gebildet ist, durch die eine gleichmäßige Flächenbelegung bewirkt wird.

Derartige Koch- und Bratgeschirre sind im Stand der Technik vielfältig bekannt. Dabei sind insbesondere Bratgeschirre (Pfannen oder dergleichen) bekannt, die vollständig aus Aluminium bzw. Aluminiumlegierungen gefertigt sind. Desweiteren sind Kochgeschirre, beispielsweise Töpfe oder dergleichen bekannt, die aus einem Edelstahltopf mit angeformtem Sandwichboden aus Aluminium oder dergleichen bestehen. Die Bodenausbildung aus Aluminium oder dergleichen Material ist aus Gründen des Wärmeüberganges und der Wärmeverteilung bevorzugt.

Da in jüngerer Zeit verstärkt sogenannte Induktionsherde angeboten werden, ist es auch üblich, solche Koch- oder Bratgeschirre mit einem induktiv erwärmbaren zusätzlichen Bodenteil zu versehen, welches beispielsweise in Form einer Platte an dem Boden des Koch- oder Bratgeschirrs befestigt wird oder auch aus spiralförmig oder nach Art eines Geleges angeordneten Stäben besteht, welche in den Boden eingeformt sind. Diese Befestigung ist relativ aufwendig, da es notwendig ist, die Teile warm miteinander zu verpressen oder zu verlöten/verschweißen. Abgesehen von dem Herstellungsaufwand ist auch nachteilig, daß aufgrund der unterschiedlichen Wärmeausdehnungskoeffizienten von Aluminium- oder Sandwichboden und darunter befestigter Platte, Stäbe oder Gelege aus induktiv erwärmbarem Material die Gefahr besteht, daß der Boden sich wölbt oder anderweitige Schäden hinsichtlich der Fixierung der Teile aneinander entstehen können.

Ein gattungsgemäßes Kochgeschirr aus Aluminium ist aus der DE 37 13 660 A1 bekannt. Bei diesem Kochgeschirr aus Aluminium besteht der Boden aus einem mit dem Aluminium vergossenen massiven Metallstück, ggf. auch einer in das Bodenmaterial eingegossenen Drahtspirale aus Kupfer oder Eisen. Auch bei dieser Ausbildung ist problematisch, daß aufgrund der unterschiedlichen Wärmeausdehnungskoeffizienten des Aluminiumwerkstoffes und des Werkstoffes des zusätzlichen eingegossenen Teiles sich der Boden wölben kann, so daß der Boden entweder hohl zurückgewölbt ist oder aber nach außen vorgewölbt ist, woraus resultiert, daß keine ebene Anlagefläche an der entsprechenden Herdplatte oder Kochfläche eines Herdes zu erreichen ist.

Derartige Töpfe oder Pfannen sind für den bestimmungsgemäßen Gebrauch nicht besonders geeignet.

Ausgehend von diesem Stand der Technik liegt der Erfindung die Aufgabe zugrunde, ein Koch- oder Bratgeschirr gattungsgemäßer Art zu schaffen, welches bei einfacher Fertigung einen hohen Gebrauchswert aufweist, insbesondere den dauerhaften Beibehalt einer ebenen Aufstandsfläche des Bodens gewahrleistet.

Zur Lösung dieser Aufgabe wird vorgeschlagen, daß die Drähte oder dergleichen dünnen Formteile aus ferritischem Edelstahl bestehen und als Gewebe ausgebildet sind, die teilweise im Material des Bodens eingebettet und von diesem umfaßt sind und teilweise aus der Bodenfläche vorragend die Aufstandsfläche bildend eingeformt sind.

Bei dieser Ausbildung ist es möglich, das Gewebe kalt in den weichmetallischen Boden einzupressen, wodurch die gewünschte Fixierung der Teile aneinander erfolgt. Dadurch, daß die einzelnen Elemente des Gewebes von dem weichmetallischen Material des Bodens weitestgehend umfaßt sind, ist eine hohe Lagesicherheit gegeben (Formschluß). Dadurch, daß die Einzeldrähte des Gewebes teilweise über das Material des Bodens vorstehen, wird eine Aufstandsfläche auf der Kochfläche gebildet, wobei sich das Koch- oder Bratgeschirr lediglich auf den vorragenden Bereichen der Formteile oder Drähte auf der Unterfläche abstützt. Dies ist insbesondere bei Glaskeramik-Kochfeldern vorteilhaft, da Aluminiumböden oder dergleichen zum "Schmieren" auf solchen glaskeramischen Kochfeldern neigen.

Der so entstehende Belag ist nur sehr schwer entfernbar. Dieser Nachteil wird durch die obenbeschriebene Anordnung vermieden. Zusätzlich wird durch die Einformung der dünnen das Gewebe bildenden Formteile in den weichmetallischen Boden quasi dessen Dicke erhöht, da das verdrängte Material zu einer Volumenvergrößerung, also zu einem dickeren Bodenteil bei gleichem Werkstoffeinsatz führt.

Hinzu kommt, daß die unterschiedlichen Wärmeausdehnungskoeffizienten zwischen dem ferritischen Edelstahlmaterial der dünnen das Gewebe bildenden Formteile und dem weichmetallischen Boden durch die Elastizität der Formteile ausgeglichen werden, weil diese in Form von Geweben angeordnet sind. Hierdurch ist eine die Wärmedehnung ausgleichende Elastizität der Einzeldrähte jeweils in deren Längsrichtung möglich, bedingt durch den wellenförmigen Längsverlauf jedes Drahtes des Gewebes. Bei der Formgebung ist noch bevorzugt, daß der zwischen den einzelnen dünnen Drähten befindliche Bereich des weichmetallischen Bodens geringfügig konkav gewölbt ist, wodurch eine bessere Aufnahme der Strahlungswärme beim Einsatz auf konventionellen Kochplatten gewährleistet ist. Grundsätzlich ist der Einsatz solcher Koch- und Bratgeschirre auch auf konventionellen Kochplatten möglich, wobei durch die erfindungsgemäße Ausbildung trotz der Anordnung der Gewebe aus ferritischem Edelstahl eine direkte Wärmeaufnahme und Strahlungswärme im Bodenbereich möglich ist, weil große Flächenelemente aus weichmetallischem Werkstoff zur Wärmeaufnahme zur Verfügung stehen.

Eine bevorzugte Weiterbildung wird darin gesehen, daß die die Aufstandsfläche bildenden Drähte oder Formteile des Gewebes über mehr als die Hälfte ihres Umfanges vom Material des Bodens umfaßt sind.

Hierdurch wird eine hohe Lagesicherheit erreicht und die Volumenvergrößerung des weichmetallischen Bodens gefördert.

Eine besonders bevorzugte Weiterbildung wird darin gesehen, daß der Abstand der einander benachbarten Drähte oder Formteile der engmaschigen Gewebestrukturen, mindestens etwa dem doppelten Umfang der runden Drähte oder Formteile des Gewebes entspricht.

Besonders bevorzugt ist ferner vorgesehen, daß die Fläche des Bodens, in welche die Drähte oder Formteile eingeformt sind, dunkel, insbesondere schwarz eingefärbt oder beschichtet ist und die die Aufstandsfläche bildenden vorragenden Bereiche der Drähte oder Formteile metallisch blank ausgebildet sind.

Durch diese Ausbildung wird die Strahlungswärmeaufnahme bei Benutzung auf konventionellen Kochplatten gefördert, wobei zudem eine Beschädigung der Beschichtung durch mechanische Einwirkung weitestgehend unterbunden ist. Die Beschichtung des Bodens kann beispielsweise als Eloxal-Beschichtung ausgebildet sein.

Ein Verfahren zur Herstellung eines Koch- und Bratgeschirres nach einem der Ansprüche 1 bis 4 besteht darin, daß insbesondere bei einem vollständig aus weichem metallischem Werkstoff (Al, Cu oder deren Legierung) bestehenden Geschirrteil das Formteil in Form eines Gewebes auf die Bodenfläche aufgelegt und kalt (bei Raumtemperatur) eingepreßt wird.

Der Herstellungsvorgang ist äußerst kostengünstig, da die Einformung des Formteiles (Gewebes) in den Boden des aus weichem metallischem Werkstoff bestehenden Geschirrteiles bei Raumtemperatur erfolgen kann.

Eine Verfahrensvariante zur Herstellung eines Koch- oder Bratgeschirres nach einem der Ansprüche 1 bis 4, wobei das Geschirr aus einem Topf aus Edelstahl besteht und an dessen Boden ein Aluminiumboden oder dergleichen weichmetallischer Boden angeschmiedet wird, besteht darin, daß auf den weichmetallischen Boden auf seiner dem Topfboden abgewandten Seite das Formteil in Form eines Gewebes aufgelegt wird und beim Anschmieden des weichmetallischen Bodens an den Topfboden in den weichmetallischen Boden eingepreßt wird.

Es ist damit ohne zusätzliche Erwärmung die Befestigung der Teile aneinander in einem einzigen Verfahrensschritt möglich.

Ausführungsbeispiele der Erfindung sind in der Zeichnung dargestellt und im folgenden näher beschrieben.

Es zeigt:
- Fig. 1 und 2: ein Koch- bzw. Bratgeschirr im Schnitt gesehen;
- Fig. 3: desgleichen von unten gesehen;
- Fig. 4 und 5: Einzelheiten in vergrößerter Darstellung.

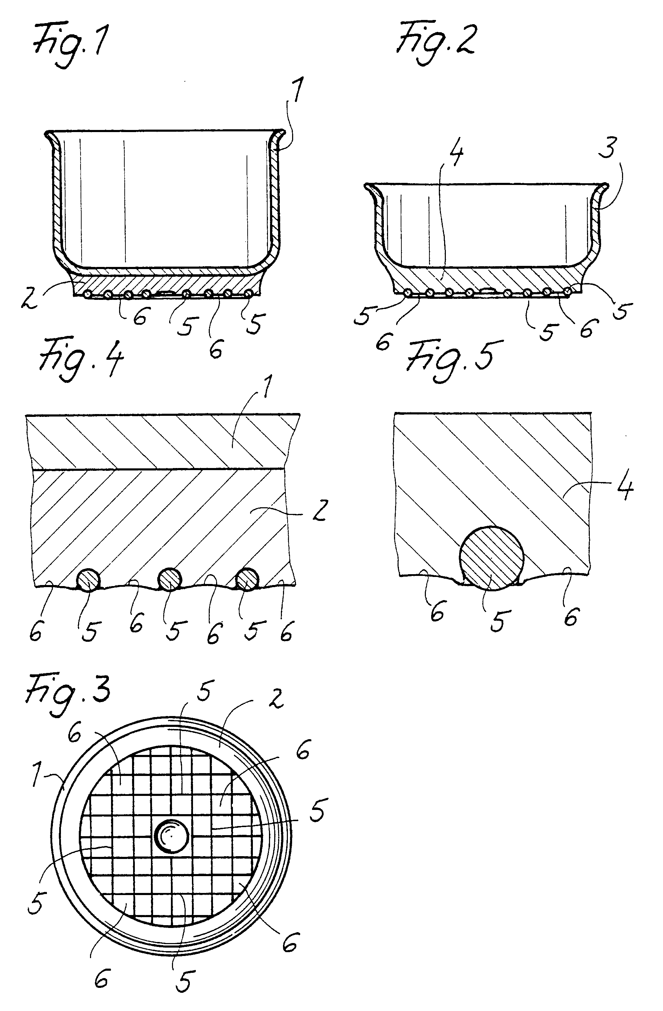

Gemäß Figur 1 besteht das Kochgeschirr aus einem Edelstahltopf 1, an dessen Boden ein Sandwichboden 2 oder dergleichen aus Aluminium, Aluminiumlegierungen oder ähnlichem weichem metallischem Werkstoff angeschmiedet ist.
Beim Ausführungsbeispiel gemäß Figur 2 ist ein Bratgeschirr 3 dargestellt, welches vollständig aus Aluminium bzw. Aluminiumlegierungen gefertigt ist. Der Boden 4 ist dabei einstöckig angeformt. Bei beiden Ausführungsbeispielen ist der Boden 2 bzw. 4 mit einem induktiv erwärmbaren Bodenteil verbunden. Dieses induktiv erwärmbare Bodenteil ist durch ein Gewebe aus Drähten 5 oder dergleichen dünne Formteile aus ferritischem Edelstahl gebildet. Vorzugsweise werden Gewebeabschnitte eingesetzt, wie beispielsweise aus Figur 3 ersichtlich. Insgesamt wird durch die Drähte 5 eine gleichmäßige Flächenbelegung bewirkt, wie das aus Figur 3 ersichtlich ist. Die Einzeldrähte 5 sind, wie insbesondere aus Figur 4 und 5 ersichtlich, teilweise im Material des Bodens 2 bzw. 4 eingebettet und von diesem Material umfaßt, wobei die Drähte 5 aus der Bodenfläche vorragend die Aufstandsfläche bildend eingeformt sind. Vorzugsweise sind die die Aufstandsfläche bildenden Drähte 5 über mehr als die Hälfte ihres Umfanges vom Material des Bodens 2 bzw. 4 umfaßt. Der Abstand der einander benachbarten Drähte 5 entspricht etwa dem doppelten Umfang der Drähte 5 kann aber auch größer sein. Auszuwählende Parameter hierzu ist einerseits, daß ausreichend Abstand eingehalten ist, um eine Einformung der Drähte 5 in das weichmetallische Material des Bodens 2 bzw. 4 zu ermöglichen, ohne daß der dazu benachbart verlegte Draht 5 störend wirkt, wobei andererseits eine möglichst dichte Flächenbelegung erwünscht ist, um eine gleichmäßige Erwärmung beim Einsatz auf Induktionsherden zu ermöglichen.

Wie aus Figur 4 und insbesondere Figur 5 ersichtlich, ist die Fläche 6 des Bodens 2 bzw. 4, in welche die Drähte 5 eingeformt sind, schwarz eingefärbt bzw. beschichtet, während die die Aufstandsfläche bildenden vorragenden Bereiche der Drähte 5 metallisch blank ausgebildet sind.

Zur Herstellung des Koch- oder Bratgeschirres gemäß Figur 2, welches vollständig aus weichem metallischem Werkstoff besteht, wird auf die Bodenfläche 6 der Draht 5 in Form eines Gewebes auf diese Bodenfläche 6 aufgelegt und kalt eingepreßt, wobei gleichzeitig die geringfügig gewölbte Ausbildung der zwischen den Drähten 5 bestehenden Bodenelemente 6 erfolgt. Unmittelbar an der Einfassung des Drahtes 5 bildet sich bei der Verformung eine wellenartige Aufbauchung, bei der noch eine verstärkte Strahlungswärmeaufnahme, insbesondere bei Verwendung auf konventionellen Kochplatten, erfolgt. Dies ist beispielsweise in Figur 5 gezeigt.

Bei der Herstellung des Koch- oder Bratgeschirres nach Figur 1 kann in einem gleichzeitigen Arbeitsgang auf den Boden des Edelstahltopfes 1 der Boden 2 aus weichmetallischem Werkstoff aufgeschmiedet werden und das auf diesen aufgelegte Gewebe (Drähte 5) in den weichmetallischen Boden eingepreßt werden.

Im Ergebnis wird ein Koch- oder Bratgeschirr aus Metall zur Verfügung gestellt, welches sowohl für konventionelle Kochtechniken als auch für den Einsatz bei sogenannten Induktionsherden geeignet ist.

Unter dem Begriff "Gewebe" ist ein Verlauf der Drähte 5 zu verstehen, bei dem parallele Scharen von Drähten 5 einander wellenförmig durchdringen. Durch das Aufschmieden des Gewebes auf den weichen Topfboden wird dennoch eine parallele Aufstandsfläche erzeugt, wobei der wellenartige Verlauf der Drähte 5 (in deren Längsrichtung gesehen) eine wärmebedingte Dehnung des Grundmaterials ohne einen bimetallartigen Biegeeffekt ermöglicht.

## Patentansprüche

1. Koch- oder Bratgeschirr (1,3) aus Metall, wobei mindestens dessen Boden (2,4) aus Aluminium, Aluminium-Legierungen, Kupfer, Kupferlegierungen oder dergleichen relativ weichem metallischem Werkstoff besteht, der nicht induktiv erwärmbar ist, und der Boden (2,4) mit einem induktiv erwärmbaren Bodenteil verbunden ist, das aus Drähten oder dergleichen dünnen Formteilen (z.B. 5) gebildet ist, durch die eine gleichmäßige Flächenbelegung bewirkt wird,
**dadurch gekennzeichnet,** daß die Drähte oder dergleichen dünnen Formteile (z.B. 5) aus ferritischem Edelstahl bestehen und als Gewebe ausgebildet sind, die teilweise im Material des Bodens (2,4) eingebettet und von diesem umfaßt sind und teilweise aus der Bodenfläche (6) vorragend die Aufstandsfläche bildend eingeformt sind.

2. Koch- oder Bratgeschirr nach Anspruch 1,
**dadurch gekennzeichnet,** daß die die Aufstandsfläche bildenden Drähte oder Formteile (z.B. 5) des Gewebes über mehr als die Hälfte ihres Umfanges vom Material des Bodens (2,4) umfaßt sind.

3. Koch- oder Bratgeschirr nach Anspruch 1 oder 2,
**dadurch gekennzeichnet,** daß der Abstand der einander benachbarten Drähte oder Formteile (z.B. 5) der engmaschigen Gewebestrukturen, mindestens etwa dem doppelten Umfang der runden Drähte oder Formteile des Gewebes entspricht.

4. Koch- oder Bratgeschirr nach einem der Ansprüche 1 bis 3, **dadurch gekennzeichnet,** daß die Fläche (6) des Bodens (2,4), in welche die Drähte oder Formteile (z.B. 5) eingeformt sind, dunkel, insbesondere schwarz, eingefärbt oder beschichtet ist und die die Aufstandsfläche bildenden vorragenden Bereiche der Drähte oder Formteile (z.B. 5) metallisch blank ausgebildet sind.

5. Verfahren zur Herstellung eines Koch- oder Bratgeschirrs nach einem der Ansprüche 1-4, **dadurch gekennzeichnet,** daß insbesondere bei einem vollständig aus weichem metallischem Werkstoff (Al, Cu oder deren Legierung) bestehenden Geschirrteil das Formteil in Form eines Gewebes auf die Bodenfläche aufgelegt und kalt (bei Raumtemperatur) eingepreßt wird.

6. Verfahren zur Herstellung eines Koch- oder Bratgeschirrs nach einem der Ansprüche 1 bis 4, wobei das Geschirr aus einem Topf aus Edelstahl besteht und an dessen Boden ein Aluminiumboden oder dergleichen weichmetallischer Boden angeschmiedet wird, **dadurch gekennzeichnet,** daß auf den weichmetallischen Boden auf seiner dem Topfboden abgewandten Seite das Formteil in Form eines Gewebes aufgelegt wird und beim Anschmieden des weichmetallischen Bodens an den Topfboden in den weichmetallischen Boden eingepreßt wird.

## Claims

1. A cooking or roasting pan (1,3) made from metal, whereby at least its base (2, 4) is made from aluminium, aluminium alloys, copper, copper alloys or a similar relatively soft metal material, which cannot be inductively heated, and the base (2, 4) is connected to an inductively heatable base part, which is formed of wires or similar thin shaped parts (e.g. 5), by which a uniform surface covering is produced,
**characterised in that** the wires or similar thin shaped parts (e.g. 5) are made from ferritic special steel and are constructed as a weave, which are partially embedded in the material of the base (2, 4) and are surrounded thereby and are moulded in so that they partly protrude from the base surface (6) and form the contact surface.

2. A cooking or roasting pan according to Claim 1,
**characterised in that** the wires or shaped parts (e.g. 5) of the weave forming the contact surface are surrounded by material of the base (2, 4) over more than half their circumference.

3. A cooking or roasting pan according to Claim 1 or 2,
**characterised in that** the distance between the adjacent wires or shaped parts (e.g. 5) of the narrow-mesh woven structures corresponds at least roughly to twice the circumference of the round wires or shaped parts of the weave.

4. A cooking or roasting pan according to one of Claims 1 to 3,
**characterized in that** the surface (6) of the base (2, 4), in which the wires or shaped parts (e.g. 5) are moulded, is dark, in particular black, coloured or coated and the protruding regions of the wires or shaped parts (e.g. 5) forming the contact surface are bright metal.

5. A process for producing a cooking or roasting pan according to one of Claims 1 to 4,
**characterised in that** in particular with a pan part made completely from a soft metal material (Al, Cu or their alloys) the shaped part in the form of a weave is laid on the base surface and pressed in cold (at ambient temperature).

6. A process for producing a cooking or roasting pan according to one of Claims 1 to 4, whereby the pan consists of a pot made of special steel and to its base is forged an aluminium base or similar soft metal base,
**characterised in that** the shaped part in the form of a weave is laid on the soft metal base on its side remote from the pot base and during the forging operation of the soft metal base to the pot base it is pressed into the soft metal base.

## Revendications

1. Récipient en métal pour cuire ou frire (1, 3), sachant qu'au moins son fond (2, 4) est composé d'aluminium, d'alliages d'aluminium, de cuivre, d'alliages de cuivre ou d'un matériau métallique relativement mou analogue qui ne peut pas être chauffé par induction et que le fond (2, 4) est relié à une pièce de fond pouvant être chauffée par induction qui est formée par des fils métalliques ou par de minces pièces usinées analogues (par ex. 5) permettant d'obtenir un revêtement de surface uniforme, caractérisé en ce que les fils métalliques ou les minces pièces usinées analogues (par ex. 5) qui sont composé(e)s d'acier spécial ferritique et sont réalisé(e)s sous forme de toile métallique ne sont que partiellement logé(e)s dans le matériau du fond (2, 4), sont entouré(e)s par ce dernier et sont réalisé(e)s en faisant partiellement saillie de la surface du fond (6) de manière à former la surface d'appui.

2. Récipient pour cuire ou frire selon la revendication 1, caractérisé en ce que les fils ou les pièces usinées de la toile métallique (par ex. 5) formant la surface d'appui sont entouré(e)s sur plus de la moitié de leur pourtour par le matériau du fond (2, 4).

3. Récipient pour cuire ou frire selon la revendication 1 ou 2, caractérisé en ce que l'écart entre les fils métalliques ou les pièces usinées adjacent(e)s (par ex. 5) de la toile métallique à mailles serrées correspond au moins au double du pourtour des fils métalliques ou des pièces usinées rond(e)s de la toile métallique.

4. Récipient pour cuire ou frire selon l'une des revendications 1 à 3, caractérisé en ce que la surface (6) du fond (2, 4) dans laquelle sont réalisé(e)s les fils métalliques ou les pièces usinées (par ex. 5) sont peint(e)s ou enduit(e)s d'une couleur sombre, notamment noire, et les zones saillantes des fils métalliques ou des pièces usinées (par ex. 5) sont réalisé(e)s en métal brillant.

5. Procédé pour fabriquer un récipient à cuire ou à frire selon l'une des revendications 1 à 4, caractérisé en ce que, notamment dans le cas d'un récipient composé entièrement d'un métal mou (Al, Cu ou l'alliage des deux), la pièce usinée sous forme de toile métallique est posée sur la surface du fond et y est enfoncée à froid (à température ambiante).

6. Procédé pour fabriquer un récipient à cuire ou à frire selon l'une des revendications 1 à 4, sachant que le récipient est composé d'une marmite en acier spécial et qu'un fond en aluminium ou un fond analogue en métal mou est forgé sur son fond, caractérisé en ce que la pièce usinée, sous forme de toile métallique est posée sur le côté du fond en métal mou qui est tourné vers le fond du récipient et, en forgeant le fond en métal mou sur le fond du récipient, est enfoncée dans le fond en métal mou.
